# EUROPÄISCHE PATENTSCHRIFT

(11) **EP 4 584 493 B1**
(45) Veröffentlichungstag und Bekanntmachung des Hinweises auf die Patenterteilung: **27.05.2026**
(21) Anmeldenummer: 23737853.4
(22) Anmeldetag: 21.06.2023
(51) Int. Cl.: F03B 3/18

(54) **LEITSCHAUFEL**
GUIDE VANE
AUBE DIRECTRICE

(30) Priorität: 07.09.2022 AT 506802022
(43) Veröffentlichungstag der Anmeldung: 16.07.2025
(73) Patentinhaber: Andritz Hydro GmbH, 1120 Wien (AT)
(72) Erfinder: OSWALD, Markus, 4614 Marchtrenk (AT)
(74) Vertreter: Wirnsberger & Lerchbaum Patentanwälte OG
(86) Internationale Anmeldenummer: PCT/AT2023/060193
(87) Internationale Veröffentlichungsnummer: WO 2024/050573

(56) Entgegenhaltungen:
- WO-A1-2020/035452
- WO-A1-95/10705
- DE-A1- 19 950 227
- DE-A1- 3 345 234
- DE-U1- 7 731 451
- US-A1- 2018 313 320

## Beschreibung

Die Erfindung betrifft eine Leitschaufel für ein Leitrad einer Pumpe oder Turbine, aufweisend einen Leitschaufelkörper mit einer Eintrittskante, einer Austrittskante, einer Profilsehne sowie zumindest einem, vorzugsweise zwei, Drehzapfen, wobei die Leitschaufel um eine Drehachse, welche durch den Drehzapfen definiert ist, drehbar lagerbar ist, wobei die Profilsehne der Leitschaufel zumindest bereichsweise von der Drehachse beabstandet ist, wobei der Leitschaufelkörper entlang einer axialen Erstreckung unterschiedliche Strömungsprofile ausbildet, welche sich an der Eintrittskante und/oder an der Austrittskante unterscheiden.

Leitschaufeln sind aus dem Stand der Technik bekannt geworden, um insbesondere bei Turbinen ein Arbeitsmedium in einem optimalen Winkel auf Laufschaufeln eines Laufrades zu leiten. Im Unterschied zu dem mit dem Laufrad drehbaren Laufschaufeln sind die Leitschaufeln in aller Regel stationär angeordnet, können jedoch in einem Einlaufgehäuse gedreht werden, um eine Strömung zu beeinflussen und gegebenenfalls einen Massenstrom zu unterbinden. Hierzu können beispielsweise bei Kaplan- oder Francis-Turbinen die Leitschaufeln regelmäßig entlang eines zum Laufrad koaxialen Kreises im Einlaufgehäuse angeordnet sein, wodurch sich ein sogenannter Leitapparat ergibt, der auch als Leitring bezeichnet wird.

Aus dem Stand der Technik bekannte Leitschaufeln sind im Leitapparat durch einen oder zwei Drehzapfen gelagert, sodass sich eine Drehachse ergibt, um welche die Leitschaufeln gedreht werden können. Diese Leitschaufeln weisen einen Leitschaufelkörper mit einem entlang einer axialen Erstreckung im Wesentlichen konstanten Strömungsprofil auf, beispielsweise ein NACA-Profil. Weiter sind Leitschaufeln mit über eine axiale Erstreckung unterschiedlichen Strömungsprofilen bekannt geworden, was auch als Profilstrak bzw. als gestrakte Leitschaufel bekannt ist. Dabei kann beispielsweise ein Skelettkurvenendwinkel entlang einer axialen Erstreckung der Leitschaufel verändert werden.

Darüber hinaus sind auch Verfahren zum Auslegen von Leitschaufeln für Wasserkraftanlagen aus dem Stand der Technik bekannt geworden. Gemäß dem Stand der Technik wird dabei üblicherweise ein Strömungsprofil gewählt und allenfalls geringfügige Änderungen an diesem Strömungsprofil vorgenommen, wie insbesondere ein Strak, um ein möglichst günstiges Design der Leitschaufel zu ermitteln.

Aus den Dokumenten DE 33 45 234 A1 und DE 77 31 451 U1 sind Leitapparate und Leitschaufeln bekannt geworden. Ferner sind Leitschaufeln des Standes der Technik aus den Dokumenten WO 2020/035452 A1, DE 199 50 227 A1 und US 2018/0313320 bekannt. Die Dokumente WO 95/10705 A1 und JP 2015 10569 A offenbaren hydraulische Strömungsmaschinen mit Leitschaufeln und Laufschaufeln

Es hat sich jedoch gezeigt, dass mit aus dem Stand der Technik bekannten Leitschaufeln in vielen Fällen ein nur unbefriedigend hoher Wirkungsgrad erreicht wird, weswegen ein Bedarf nach Leitschaufeln besteht, mit welchen ein höherer Wirkungsgrad erzielt werden kann.

Hier setzt die Erfindung an. Aufgabe der Erfindung ist es, eine Leitschaufel der eingangs genannten Art anzugeben, mit welcher bei Einsatz in einem Wasserkraftwerk ein besonders hoher Wirkungsgrad erreicht werden kann.

Diese Aufgabe wird erfindungsgemäß durch eine Leitschaufel der eingangs genannten Art gelöst, bei welcher die Drehachse zumindest bereichsweise außerhalb des Leitschaufelkörpers positioniert ist.

Im Rahmen der Erfindung wurde einerseits erkannt, dass durch einen zur Drehachse exzentrisch angeordneten Leitschaufelkörper, bei welchem die Profilsehne der Leitschaufel zumindest bereichsweise, vorzugsweise entlang einer gesamten axialen Erstreckung der Leitschaufel, von der Drehachse beabstandet ist, eine günstige Strömungsbeeinflussung möglich ist. So können insbesondere bei Sanierung bestehender Wasserkraftanlagen, bei welchen Positionen der Drehzapfen bzw. Positionen der Drehachsen der Leitschaufeln nicht mehr verändert werden können, durch exzentrisch angeordnete Leitschaufelkörper Abstände zwischen den Leitschaufeln und den Laufschaufeln verändert werden. Insbesondere durch eine Verringerung eines Abstandes zwischen den Leitschaufeln und den Laufschaufeln, also einer Verlagerung der Leitschaufeln radial nach innen, also zur Maschinenachse hin, kann häufig eine günstige Strömungsbeeinflussung erreicht werden, welche zu einer Wirkungsgraderhöhung führt.

Andererseits wurde im Rahmen der Erfindung erkannt, dass mit einem Leitschaufelkörper, welcher zumindest bereichsweise eine durch eine Freiformfläche gebildete Oberfläche aufweist, besonders günstige Strömungsverhältnisse erreicht werden können. Hintergrund ist, dass herkömmliche Leitschaufeln, welche in der Regel ein entlang einer axialen Erstreckung konstantes Strömungsprofil, gegebenenfalls mit einem Strak, aufweisen, insbesondere in Randbereichen aufgrund von Grenzschichteffekten lokale Verwirbelungen bewirken, welche zu ungünstigen Wirkungsgraden führen. Bei Einsatz einer Freiformfläche für die Leitschaufel ist insbesondere keine Limitierung auf ein einziges Strömungsprofil gegeben, sodass die Leitschaufel beispielsweise axial endseitig, wo Grenzschichteffekte eine Rolle spielen, entsprechend anders ausgebildet sein kann als an einem axial mittleren Bereich, in welchem keine Grenzschichteffekte mehr vorliegen.

Ein besserer Wirkungsgrad kann sowohl nur mit einer exzentrischen Leitschaufel als auch nur mit einer eine Freiformfläche aufweisenden Leitschaufel erreicht werden, wenngleich bevorzugt vorgesehen ist, dass beide Merkmale umgesetzt werden, um einen besonders hohen Wirkungsgrad zu erreichen.

Erfindungsgemäß ist vorgesehen, dass die Drehachse zumindest bereichsweise, vorzugsweise entlang einer gesamten axialen Erstreckung des Leitschaufelkörpers, außerhalb des Leitschaufelkörpers positioniert ist. Als axiale Erstreckung wird hierbei eine Erstreckung entlang der durch die Drehzapfen definierten Drehachse angesehen. Als Längsrichtung wird die Richtung entlang der Profilsehne angesehen, welche durch eine direkte Verbindung von Eintrittskante und Austrittskante definiert ist. Eine Dicke des Strömungsprofiles bzw. eine Profilbreite wird entlang einer Querrichtung in einer Ebene normal zur Axialrichtung bzw. normal zur axialen Erstreckung und normal zur Längsrichtung definiert.

Besonders günstig ist es, wenn die Drehachse zumindest bereichsweise, vorzugsweise entlang einer gesamten axialen Erstreckung des Leitschaufelkörpers, einen Abstand zum Leitschaufelkörper aufweist, welcher zumindest 50 %, vorzugsweise zumindest 75 %, einer maximalen Dicke der Leitschaufel entspricht. Dies ermöglicht eine gute Heranführung der Leitschaufeln an die Laufschaufeln, um einen kurzen Strömungsweg zwischen den Leitschaufeln und den Laufschaufeln zu erreichen, was sich als strömungsmechanisch günstig herausgestellt hat.

Es hat sich bewährt, dass die Profilsehnen zumindest in einem Teilbereich der Leitschaufel, vorzugsweise entlang einer gesamten axialen Erstreckung des Leitschaufelkörpers, einen Abstand zur Drehachse aufweist, welcher zumindest 15 %, vorzugsweise zumindest 30 %, einer Länge der Profilsehnen entspricht.

Als Leitschaufelkörper wird hierbei der ein Strömungsprofil aufweisende Teil der Leitschaufel angesehen, welcher bei bestimmungsgemäßem Einsatz der Leitschaufel in einem Leitring bzw. Leitapparat eines Wasserkraftwerkes von einem Fluid umströmt wird. Es versteht sich, dass der Leitschaufelkörper endseitig bei einer Anbindung an die Drehzapfen mit einer Verrundung oder dergleichen ausgebildet sein kann, wobei dann natürlich im Bereich dieser Verrundung ein geringerer Abstand zwischen dem Leitschaufelkörper und der Drehachse vorgesehen sein kann. Darüber hinaus kann auch vorgesehen sein, dass der Leitschaufelkörper im Bereich der endseitigen Verrundung keinen Abstand zur Drehachse mehr aufweist.

Ein Abstand der Profilsehne zur Drehachse kann auch relativ bezogen auf eine Länge der Profilsehne angegeben werden. Hier hat es sich bewährt, wenn die Profilsehne zumindest in einem Teilbereich der Leitschaufel, vorzugsweise entlang einer gesamten axialen Erstreckung des Leitschaufelkörpers, einen Abstand zur Drehachse aufweist, welcher zumindest 25 %, vorzugsweise zumindest 30 %, einer Länge der Profilsehne entspricht. Eine derartige Ausbildung der Leitschaufel hat sich insbesondere für eine Anwendung an einer Francis-Turbine als vorteilhaft erwiesen.

Günstig ist es, wenn die Profilsehne zumindest in einem Teilbereich der Leitschaufel, vorzugsweise entlang einer gesamten axialen Erstreckung des Leitschaufelkörpers, einen Abstand zur Drehachse aufweist, welcher zumindest 50 %, vorzugsweise zumindest 75 %, einer maximalen Dicke der Leitschaufel entspricht.

Es hat sich gezeigt, dass Grenzschichteffekte besonders in einem Bereich der Eintrittskante vergleichsweise großen Einfluss auf den Wirkungsgrad haben. Diesbezüglich hat es sich daher als günstig erwiesen, wenn der Leitschaufelkörper entlang einer axialen Erstreckung unterschiedliche Strömungsprofile ausbildet, welche sich an der Eintrittskante unterscheiden. Die Eintrittskante kann somit entlang der Axialrichtung bzw. entlang der axialen Erstreckung der Leitschaufel jeweils den lokalen Strömungsbedingungen entsprechend optimiert ausgebildet sein, sodass beispielsweise in einem Randbereich bzw. endseitig an die Grenzschichten angepasste Strömungsprofile vorgesehen sein können.

Günstig ist es, wenn die Strömungsprofile an der Eintrittskante axial endseitig eine größere Dicke aufweisen als in einem Bereich dazwischen. Es hat sich gezeigt, dass dadurch eine vorteilhafte Strömungsbeeinflussung ermöglicht ist.

Bevorzugt ist vorgesehen, dass die Strömungsprofile an der Eintrittskante axial endseitig Profilsehnen aufweisen, welche länger sind als Profilsehnen von Strömungsprofilen dazwischen, sodass sich an der Eintrittskante endseitige Nasen bilden. Durch diese endseitigen Nasen an der Eintrittskante kann eine Zuströmung positiv beeinflusst werden, wodurch ein höherer Wirkungsgrad erreicht wird.

Besonders bevorzugt ist vorgesehen, dass die Profilsehnen der endseitigen Strömungsprofile an der Eintrittskante unter einem Winkel zu Profilsehnen von Strömungsprofilen dazwischen stehen. So hat sich gezeigt, dass aufgrund von Grenzschichteffekten an einem axialen Ende und einem axialen Anfang der Leitschaufel andere Strömungsbedingungen vorherrschen können, welche bei einer entlang der axialen Erstreckung konstanten Leitschaufel zu Verwirbelungen und einer Wirkungsgradreduktion führen, weswegen am Anfang und am Ende der Leitschaufel anders geneigte Profilsehnen sehr günstig für den Wirkungsgrad sein können. Es versteht sich, dass sich die Neigung der Profilsehne am axialen Ende und am axialen Anfang üblicherweise durch die Strömung in diesem Bereich bzw. durch die Auswirkung von Grenzschichten ergibt, welche insbesondere mit einer Strömungssimulation ermittelt werden können. Entsprechend kann auch eine Skelettlinie an axialen Endbereichen anders geneigt sein als in axial mittleren Bereichen der Leitschaufel, insbesondere an der Eintrittskante.

Erfindungsgemäß ist vorgesehen, dass der Leitschaufelkörper entlang einer axialen Erstreckung unterschiedliche Strömungsprofile ausbildet, welche sich an der Eintrittskante und/oder der Austrittskante unterscheiden. Somit ist es beispielsweise auch an der Austrittskante möglich, das Strömungsprofil des Leitschaufelkörpers an Grenzschichteffekte anzupassen.

Darüber hinaus kann dann auch die Leitschaufel im Bereich der Austrittskante derart breit ausgebildet werden, dass ausreichend Platz für eine Dichtung an der Stirnseite der Leitschaufel verbleibt.

Besonders günstig ist es, wenn Strömungsprofile in einem Bereich, welcher nahe an der Austrittskante ist, axial endseitig eine größere Dicke aufweisen als in einem Bereich dazwischen, sodass sich eine Aufdickung bildet. Dies ermöglicht eine gute Positionierung einer Dichtung stirnseitig am Leitschaufelkörper nahe bis an die Austrittskante, wodurch Wirkungsgradverluste durch ein Umströmen der Leitschaufeln an den axialen Enden reduziert werden. Als Bereich, welcher nahe an der Austrittskante positioniert ist, kann ein Bereich verstanden werden, welcher von der Austrittskante weniger als 30 %, insbesondere weniger als 20 %, vorzugsweise weniger als 10 %, besonders bevorzugt weniger als 5 %, einer Länge der Skelettlinie beabstandet ist. Die Aufdickung kann bis zur Austrittskante ragen, kann jedoch auch vor der Austrittskante enden, beispielsweise mit einem Abstand von 1 % bis 10 % der Skelettlinienlänge vor der Austrittskante, sodass die Austrittskante selbst keine Verdickung aufweist. Dies ermöglicht eine besonders gute stirnseitige Abdichtung des Leitschaufelkörpers.

Die Aufdickung kann an einem axialen Ende der Leitschaufel oder an beiden axialen Enden vorgesehen sein, um an der entsprechenden Stirnseite eine besonders gute Abdichtung zu ermöglichen.

Bevorzugt ist vorgesehen, dass an Stirnseiten des Leitschaufelkörpers Dichtungen angeordnet sind. Üblicherweise sind diese Dichtungen in Nuten positioniert, welche stirnseitig angeordnet sind. Diese Dichtungen dichten einen Strömungskanal gegenüber Begrenzungsflächen im Leitapparat ab. Die Nuten und Dichtungen können sich bis in den Bereich der Aufdickungen erstrecken, insbesondere über die gesamte Länge der Aufdickungen, um eine möglichst gute Abdichtung zu erreichen.

Es hat sich bewährt, dass die Drehzapfen eine Stirnfläche aufweisen, welche etwa normal zur Drehachse ausgebildet ist und an welcher die Drehzapfen mit dem Leitschaufelkörper verbunden sind. Eine derartige Ausbildung einer Leitschaufel wird auch als Tellerdesign bezeichnet, da die Enden der Drehzapfen normal auf die Drehachse stehen und etwa tellerförmig ausgebildet sind.

Günstig ist es, wenn an einem Übergangsbereich zwischen Leitschaufelkörper und Stirnfläche eine Verrundung angeordnet ist, wobei die Verrundung entlang einer Längsrichtung der Leitschaufel unterschiedliche Krümmungsradien aufweist. Dadurch werden günstige Strömungsverhältnisse erreicht, welche zu einem vorteilhaften Wirkungsgrad beitragen. Durch die Anwendung unterschiedlicher Krümmungsradien entlang der Längsrichtung an der Verrundung kann auch hier auf lokale Strömungsbedingungen Bezug genommen werden, welche beispielsweise in einer Strömungssimulation ermittelt werden können. Grundsätzlich ist ein kleiner Krümmungsradius günstig, um einen großen Querschnitt für das durchströmende Fluid zu erreichen, jedoch kann in einzelnen Bereichen ein größerer Krümmungsradius erforderlich sein, um Anforderungen beispielsweise in Bezug auf Festigkeit oder Steifigkeit zu genügen.

Durch Anwendung unterschiedlicher Krümmungsradien entlang der Längsrichtung der Leitschaufel können beide Ziele erreicht werden.

Insbesondere kann vorgesehen sein, dass ein Krümmungsradius entlang der Längsrichtung der Leitschaufel zunächst größer wird, dann kleiner wird und schließlich wieder größer wird. Ferner kann vorgesehen sein, dass die Verrundung entlang der Längsrichtung einen oder mehrere Wendepunkte aufweist.

Es hat sich bewährt, dass der Leitschaufelkörper axial endseitig Verrundungen aufweist, welche sich von der Eintrittskante bis zur Austrittskante erstrecken, insbesondere konkave Verrundungen. Die Verrundungen können somit in Längsrichtung über die Drehzapfen hinausgehen. Dadurch werden scharfe Ecken im Strömungsprofil vermieden, welche sich andernfalls an einer Berührungsfläche zwischen dem Leitschaufelkörper und einer umgebenden Wand ergeben könnten.

Bei einem Leitrad für eine Pumpe oder Turbine, insbesondere für eine Kaplan- oder Francis-Turbine, welche durch mehrere Leitschaufeln gebildet ist, ist es bevorzugt, wenn die Leitschaufeln erfindungsgemäß ausgebildet sind.

Günstig ist es, wenn die Schaufelkörper der Leitschaufeln derart exzentrisch zu den Drehachsen der jeweiligen Leitschaufeln angeordnet sind, dass die Profilsehnen der Schaufelkörper einen geringeren Abstand zur Maschinenachse als die Drehachsen aufweisen.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 bis 6 eine erfindungsgemäß ausgebildete Leitschaufel in unterschiedlichen Ansichten;
Fig. 7 einen Schnitt durch die in Fig. 5 dargestellte Leitschaufel entlang der Linie VII-VII.

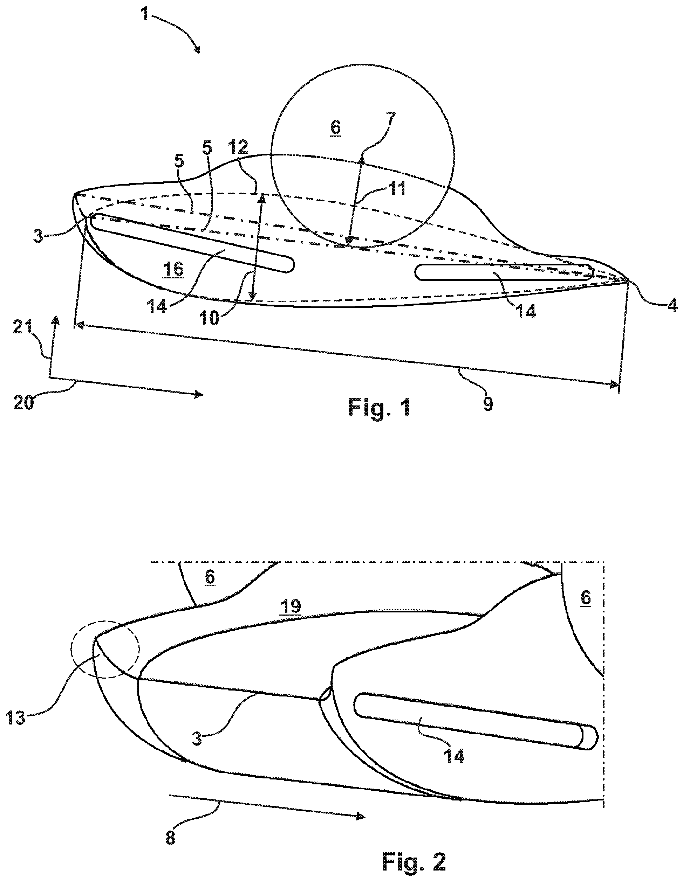

Fig. 1 bis 6 zeigen eine erfindungsgemäße Leitschaufel 1 in unterschiedlichen Ansichten, wobei Fig. 1 eine Ansicht mit Blickrichtung entlang einer Drehachse 7 zeigt, um welche Drehachse 7 die Leitschaufel 1 drehbar in einem Leitapparat anordenbar ist und welche Drehachse 7 durch zwei an einem Leitschaufelkörper 2 stirnseitig angebrachte Drehzapfen 6 definiert ist. Es versteht sich, dass auch eine Ausbildung möglich ist, bei welcher nur ein Drehzapfen 6 vorgesehen ist und die Drehachse 7 durch nur einen Drehzapfen 6 definiert wird.

Der Leitschaufelkörper 2 weist dabei entlang der Axialrichtung 8 kein konstantes Strömungsprofil 12 auf, sondern sind einzelne Bereiche des Leitschaufelkörpers 2 entlang der Axialrichtung 8 strömungsmechanisch jeweils an die Strömung optimiert angepasst, wobei beispielsweise Grenzschichteffekte am axialen Anfang und axialen Ende durch eine in diesen Bereichen geänderte Form des Strömungsprofils 12 berücksichtigt werden. Diese komplexe Form der Oberfläche wird hier als Freiformfläche bezeichnet, zumal die Oberfläche nicht einfach durch Extrusion eines Strömungsprofils 12 entlang der Axialrichtung 8 gebildet werden kann.

Wie in Fig. 1 ersichtlich, ist der Leitschaufelkörper 2 exzentrisch zur Drehachse 7 angeordnet bzw. von der Drehachse 7 beabstandet. Ein Abstand 11 einer Profilsehne 5, welche eine Verbindung einer Eintrittskante 3 mit einer Austrittskante 4 des Leitschaufelkörpers 2 bildet, beträgt hier mehr als 25 % einer Länge 9 der Profilsehne 5 bzw. einer Länge 9 der Leitschaufel 1.

Der Leitschaufelkörper 2 bildet zwischen Eintrittskante 3 und Austrittskante 4 ein Strömungsprofil 12 aus, wobei sich das Strömungsprofil 12 entlang einer Axialrichtung 8 ändert, sodass Schnitte normal zur Axialrichtung 8 unterschiedliche Strömungsprofile 12 aufweisen. Zur Veranschaulichung sind Profilsehnen 5 von zwei unterschiedlichen Strömungsprofilen 12 in Fig. 1 dargestellt, wobei Profilsehnen 5 eines Strömungsprofiles 12 in einem axial endseitigen Bereich und eines Strömungsprofiles 12 in einem axial mittleren Bereich dargestellt sind, welche wie dargestellt unter einem Winkel zueinander stehen. Im dargestellten Ausführungsbeispiel schneiden sich die Profilsehnen 5 an der Austrittskante 4, wenngleich grundsätzlich auch eine Ausführungsform möglich wären, bei welcher sich die Strömungsprofile 12 in einem axial endseitigen Bereich auch an der Austrittskante 4 von Strömungsprofilen 12 in einem axial mittleren Bereich unterscheiden, sodass sich die Lage der Austrittskante 4 entlang der Axialrichtung 8 ändert bzw. die Austrittskante 4 nicht parallel zur Axialrichtung 8 verläuft.

Im dargestellten Ausführungsbeispiel entspricht ein Abstand 11 der Profilsehne 5 von der Drehachse 7 etwa dem 1,2-fachen einer maximalen Dicke 10 des Profils in einer Querrichtung 21, welche normal zur Längsrichtung 20 und normal zur Drehachse 7 bzw. zur Axialrichtung 8 ausgerichtet ist. Der Abstand 11 kann auch in Relation zur Länge 9 der Profilsehne 5 angegeben werden, wobei der Abstand 11 hier etwa 20 % einer Länge 9 der Profilsehne 5 entspricht. Wie ersichtlich ist auch ein Strömungsprofil 12 des Leitschaufelkörpers 2, und somit auch der Leitschaufelkörper 2 selbst, in einem mittleren Bereich von der Drehachse 7 beabstandet.

Durch diese exzentrische Anordnung der Leitschaufel 1 relativ zur Drehachse 7 kann eine geringe Distanz von Leitschaufel 1 zu Laufschaufeln eines Laufrades erreicht werden, wodurch ein Strömungspfad zwischen Leitschaufel 1 und Laufschaufel kurz ist und somit Verwirbelungen zwischen den Leitschaufeln 1 und den Laufschaufeln reduziert werden, wodurch eine hohe Effizienz erreicht wird.

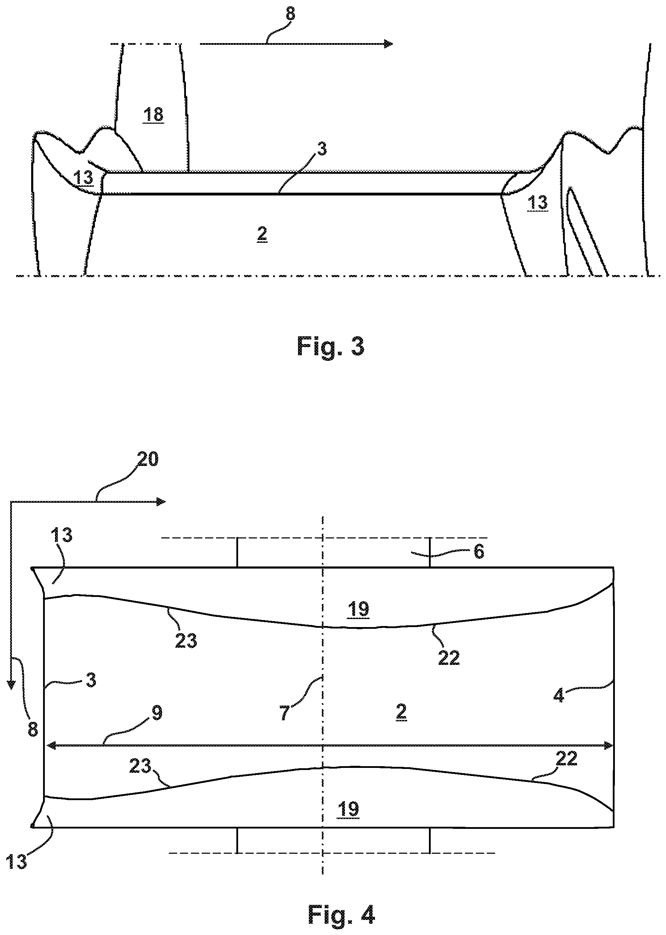

Fig. 2 und 3 zeigen die Eintrittskante 3 der Leitschaufel 1 im Detail. Wie ersichtlich weist die Leitschaufel 1 an einem Anfang und einem Ende, jeweils in Axialrichtung 8 betrachtet, Nasen 13 auf, welche sich weiter in Längsrichtung 20 erstrecken als die Eintrittskante 3 in einem Bereich zwischen Anfang und Ende. Hintergrund ist, dass durch die entsprechenden Nasen 13 ein Design der Leitschaufeln 1 bzw. der Leitschaufelkörper 2 am axialen Anfang und am axialen Ende erreicht wird, mit welchem in einer entsprechenden Grenzschicht vorliegenden Strömungsbedingungen Rechnung getragen werden kann. Ein Strömungsprofil 12 des Leitschaufelkörpers 2 ändert sich somit entlang der axialen Erstreckung und ist im Bereich der Eintrittskante 3 auch eine Skelettlinie axial anfangsseitig und endseitig anders orientiert als dazwischen, um die Strömung in diesem Bereich besonders gut aufnehmen zu können.

Wie sich in aus Fig. 3 ergibt, ist die Eintrittskante 3 in Querrichtung 21 betrachtet somit etwa U-förmig ausgebildet bzw. bildet endseitige Nasen 13 zur Strömungsoptimierung aus.

Fig. 4 zeigt eine Seitenansicht der Leitschaufel 1. Neben den Nasen 13 an der Eintrittskante 3 ist hier ein Übergang 22 von einer Verrundung 19 auf den Leitschaufelkörper 2 ersichtlich. Dieser wird durch Strömungssimulationen ermittelt und weist über eine Längsrichtung 20 der Leitschaufel 1 unterschiedliche Krümmungen auf, wodurch besonders gut auf lokale Strömungsbedingungen Bezug genommen werden kann, um einen sehr hohen Wirkungsgrad zu erreichen. Insbesondere ist in Fig. 4 ersichtlich, dass der Übergang 22 der Verrundung 19 zum Teil des Leitschaufelkörpers 2, welcher einen in axialer Richtung etwa konstanten Querschnitt aufweist, einen Wendepunkt 23 in einem vorderen Drittel der Leitschaufel 1 aufweist.

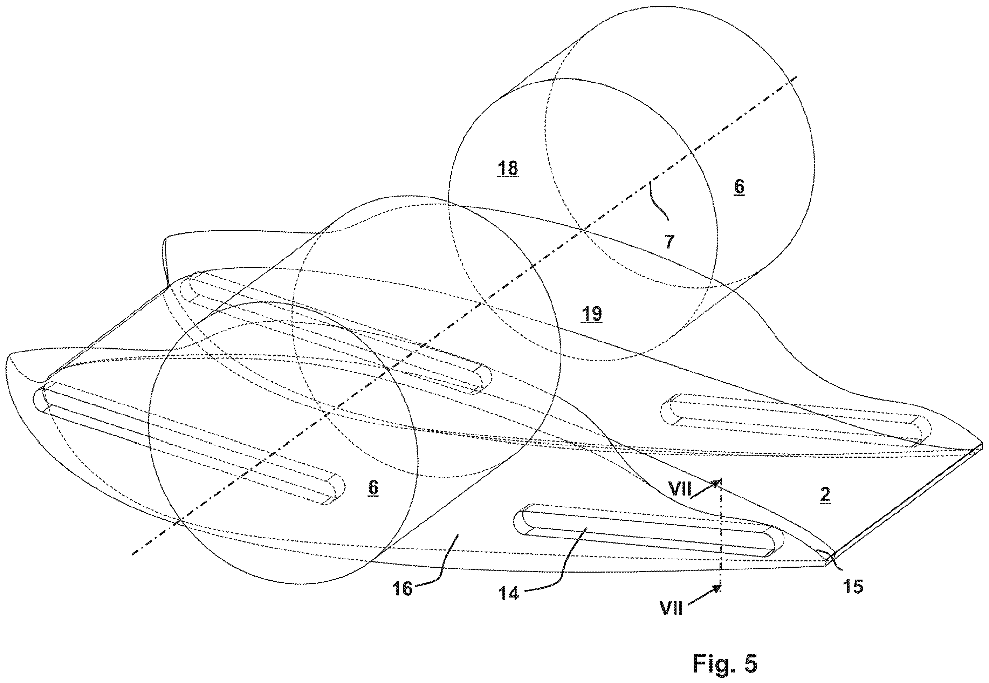

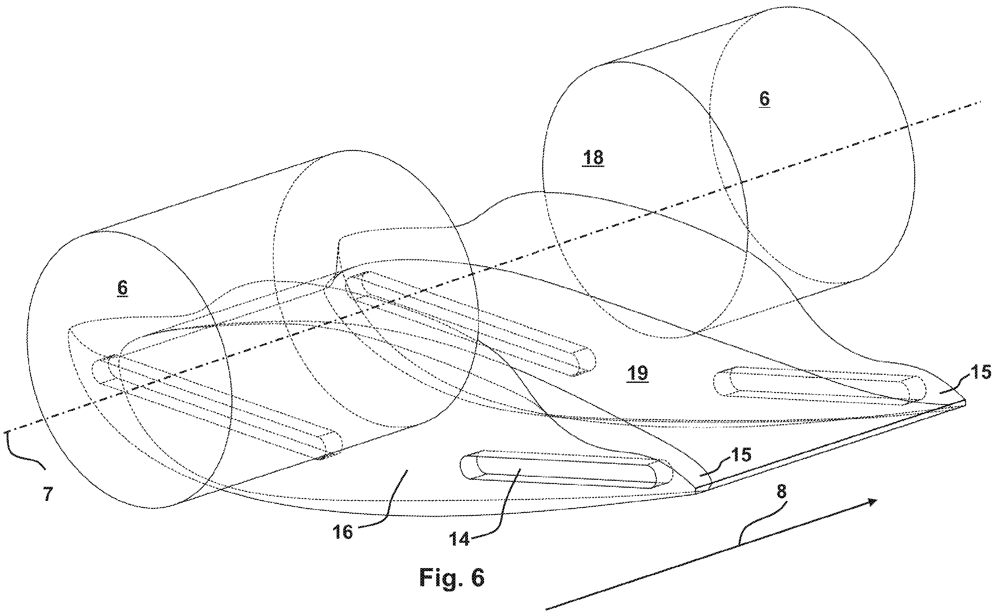

Fig. 5 und 6 zeigen weitere Ansichten der Leitschaufel 1, wobei die Austrittskante 4 gut ersichtlich ist. Wie hier gut erkennbar, weist der Leitschaufelkörper 2 auch an der Austrittskante 4 einen entlang der Achsrichtung nicht kontinuierlichen bzw. veränderlichen Querschnitt auf, sodass eine Dicke 10 des Profils am axialen Anfang und am axialen Ende größer ist als zwischen diesen Bereichen. Dadurch verbleibt an Stirnseiten 16 des Leitschaufelkörpers 2 mehr Raum für eine Nut 14, in welcher eine Dichtung 17 angeordnet werden kann.

Fig. 5 und 6 zeigen darüber hinaus das Tellerdesign der Leitschaufel 1, wobei die Drehzapfen 6 Stirnflächen 18 aufweisen, welche etwa normal zur Drehachse 7 ausgerichtet sind. Zwischen den Stirnflächen 18 der Drehzapfen 6 und den Leitschaufelkörpern 2 ist eine Verrundung 19 angeordnet, welche entlang der Längsrichtung 20 der Leitschaufel 1 unterschiedliche Krümmungen aufweist und sich von der Eintrittskante 3 bis zur Austrittskante 4, also über den Drehzapfen 6 bzw. den Teller hinaus, erstreckt.

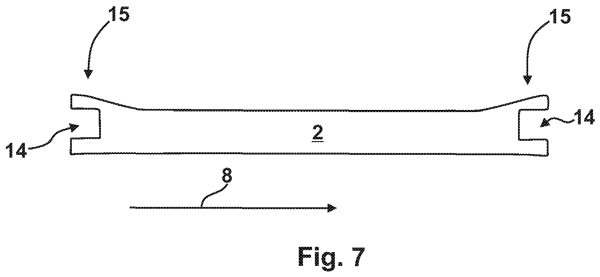

Fig. 7 zeigt einen Schnitt durch den Leitschaufelkörper 2 entlang der Linie VII-VII in Fig. 5 in nicht maßstäblicher Darstellung. Hier ist die axial endseitige Aufdickung 15 besonders gut erkennbar, welche die stirnseitige Nut 14 bis in einen Bereich nahe der Austrittskante 4 ermöglicht, sodass eine stirnseitige Strömung nahezu bis zur Austrittskante 4 verhindert ist, wodurch ein besonders hoher Wirkungsgrad erreicht wird. Wie gut erkennbar ist, wäre ohne der Aufdickung 15 keine Nut 14 mehr in diesem Bereich nahe der Austrittskante 4 möglich.

Mit einer erfindungsgemäßen Leitschaufel 1 kann bei Einsatz in einer Wasserkraftanlage eine besonders günstige Strömung erreicht werden, welche zu einem hohen Wirkungsgrad führt.

## Patentansprüche

1. Leitschaufel (1) für ein Leitrad einer Pumpe oder Turbine, aufweisend einen Leitschaufelkörper (2) mit einer Eintrittskante (3), einer Austrittskante (4), einer Profilsehne (5) sowie zumindest einem Drehzapfen (6), wobei die Leitschaufel (1) um eine Drehachse (7), welche durch den Drehzapfen (6) definiert ist, drehbar lagerbar ist, wobei die Profilsehne (5) der Leitschaufel (1) zumindest bereichsweise von der Drehachse (7) beabstandet ist, wobei der Leitschaufelkörper (2) entlang einer axialen Erstreckung unterschiedliche Strömungsprofile (12) ausbildet, welche sich an der Eintrittskante (3) und/oder an der Austrittskante (4) unterscheiden, **dadurch gekennzeichnet, dass** die Drehachse (7) zumindest bereichsweise außerhalb des Leitschaufelkörpers (2) positioniert ist.

2. Leitschaufel (1) nach Anspruch 1, **dadurch gekennzeichnet, dass** die Drehachse (7) entlang einer gesamten axialen Erstreckung des Leitschaufelkörpers (2) außerhalb des Leitschaufelkörpers (2) positioniert ist.

3. Leitschaufel (1) nach Anspruch 1 oder 2, **dadurch gekennzeichnet, dass** die Drehachse (7) zumindest bereichsweise, vorzugsweise entlang einer gesamten axialen Erstreckung des Leitschaufelkörpers (2), einen Abstand (11) zum Leitschaufelkörper (2) aufweist, welcher zumindest 50 %, vorzugsweise zumindest 75 %, einer maximalen Dicke (10) der Leitschaufel (1) entspricht.

4. Leitschaufel (1) nach einem der Ansprüche 1 bis 3, **dadurch gekennzeichnet, dass** die Profilsehne (5) zumindest in einem Teilbereich der Leitschaufel (1), vorzugsweise entlang einer gesamten axialen Erstreckung des Leitschaufelkörpers (2), einen Abstand (11) zur Drehachse (7) aufweist, welcher zumindest 15 %, vorzugsweise zumindest 30 %, einer Länge (9) der Profilsehne (5) entspricht.

5. Leitschaufel (1) nach einem der Ansprüche 1 bis 4, **dadurch gekennzeichnet, dass** die Profilsehne (5) zumindest in einem Teilbereich der Leitschaufel (1), vorzugsweise entlang einer gesamten axialen Erstreckung des Leitschaufelkörpers (2), einen Abstand (11) zur Drehachse (7) aufweist, welcher zumindest 50 %, vorzugsweise zumindest 75 %, einer maximalen Dicke (10) der Leitschaufel (1) entspricht.

6. Leitschaufel (1) nach einem der Ansprüche 1 bis 5, **dadurch gekennzeichnet, dass** die Strömungsprofile (12) an der Eintrittskante (3) axial endseitig eine größere Dicke (10) aufweisen als in einem Bereich dazwischen.

7. Leitschaufel (1) nach einem der Ansprüche 1 bis 6, **dadurch gekennzeichnet, dass** die Strömungsprofile (12) an der Eintrittskante (3) axial endseitig Profilsehnen (5) aufweisen, welche länger sind als Profilsehnen (5) von Strömungsprofilen (12) dazwischen, sodass sich an der Eintrittskante (3) endseitige Nasen (13) bilden.

8. Leitschaufel (1) nach einem der Ansprüche 1 bis 7, **dadurch gekennzeichnet, dass** die Profilsehnen (5) der endseitigen Strömungsprofile (12) an der Eintrittskante (3) unter einem Winkel zu Profilsehnen (5) von Strömungsprofilen (12) dazwischen stehen.

9. Leitschaufel (1) nach einem der Ansprüche 1 bis 8, **dadurch gekennzeichnet, dass** Strömungsprofile (12) in einem Bereich, welcher nahe an der Austrittskante (4) ist, axial endseitig eine größere Dicke (10) aufweisen als in einem Bereich dazwischen, sodass sich eine Aufdickung (15) bildet.

10. Leitschaufel (1) nach einem der Ansprüche 1 bis 9, **dadurch gekennzeichnet, dass** an Stirnseiten (16) des Leitschaufelkörpers (2) Dichtungen angeordnet sind.

11. Leitschaufel (1) nach einem der Ansprüche 1 bis 10, **dadurch gekennzeichnet, dass** die Drehzapfen (6) eine Stirnfläche (18) aufweisen, welche etwa normal zur Drehachse (7) ausgebildet ist und an welcher die Drehzapfen (6) mit dem Leitschaufelkörper (2) verbunden sind.

12. Leitschaufel (1) nach Anspruch 11, **dadurch gekennzeichnet, dass** an einem Übergangsbereich zwischen Leitschaufelkörper (2) und Stirnfläche (18) eine Verrundung (19) angeordnet ist, wobei die Verrundung (19) entlang einer Längsrichtung (20) der Leitschaufel (1) unterschiedliche Krümmungsradien aufweist.

13. Leitschaufel (1) nach einem der Ansprüche 1 bis 12, **dadurch gekennzeichnet, dass** der Leitschaufelkörper (2) axial endseitig Verrundungen (19) aufweist, welche sich von der Eintrittskante (3) bis zur Austrittskante (4) erstrecken.

14. Leitrad für eine Pumpe oder Turbine, insbesondere für eine Kaplan- oder Francis-Turbine, das durch mehrere Leitschaufeln (1) gebildet ist, **dadurch gekennzeichnet, dass** die Leitschaufeln (1) nach einem der Ansprüche 1 bis 13 ausgebildet sind.

15. Leitrad nach Anspruch 14, **dadurch gekennzeichnet, dass** die Schaufelkörper der Leitschaufeln (1) derart exzentrisch zu den Drehachsen (7) der jeweiligen Leitschaufeln (1) angeordnet sind, dass die Profilsehnen (5) der Schaufelkörper einen geringeren Abstand (11) zur Maschinenachse als die Drehachsen (7) aufweisen.

## Claims

1. A guide vane (1) for a guide wheel of a pump or turbine, having a guide vane body (2) with a leading edge (3), an outlet edge (4), a chord (5) and at least one pivot (6), wherein the guide vane (1) can be mounted in a rotatable manner about an axis of rotation (7), which is defined by the pivot (6), wherein the chord (5) of the guide vane (1) is spaced from the axis of rotation (7) at least in some regions, wherein the guide vane body (2) forms different flow profiles (12) along an axial extent, which differ at the leading edge (3) and/or at the outlet edge (4), **characterized in that** the axis of rotation (7) is positioned outside the guide vane body (2) at least in some regions.

2. The guide vane (1) according to Claim 1, **characterized in that** the axis of rotation (7) is positioned outside the guide vane body (2) along an entire axial extent of the guide vane body (2).

3. The guide vane (1) according to Claim 1 or 2, **characterized in that** the axis of rotation (7) has a spacing (11) from the guide vane body (2) at least in some regions, preferably along an entire axial extent of the guide vane body (2), which spacing corresponds to at least 50%, preferably at least 75%, of a maximum thickness (10) of the guide vane (1).

4. The guide vane (1) according to any one of Claims 1 to 3, **characterized in that** the chord (5) has a spacing (11) from the axis of rotation (7) at least in a subregion of the guide vane (1), preferably along an entire axial extent of the guide vane body (2), which spacing corresponds to at least 15%, preferably at least 30%, of a length (9) of the chord (5).

5. The guide vane (1) according to any one of Claims 1 to 4, **characterized in that** the chord (5) has a spacing (11) from the axis of rotation (7) at least in a subregion of the guide vane (1), preferably along an entire axial extent of the guide vane body (2), which spacing corresponds to at least 50%, preferably at least 75%, of a maximum thickness (10) of the guide vane (1).

6. The guide vane (1) according to any one of Claims 1 to 5, **characterized in that** the flow profiles (12) on the leading edge (3) have a larger thickness (10) axially at the ends than in a region therebetween.

7. The guide vane (1) according to any one of Claims 1 to 6, **characterized in that** the flow profiles (12) have chords (5) on the leading edge (3) axially at the ends, which chords are longer than chords (5) of flow profiles (12) therebetween, so that end-side noses (13) are formed on the leading edge (3).

8. The guide vane (1) according to any one of Claims 1 to 7, **characterized in that** the chords (5) of the end-side flow profiles (12) on the leading edge (3) are at an angle to chords (5) of flow profiles (12) therebetween.

9. The guide vane (1) according to any one of Claims 1 to 8, **characterized in that** flow profiles (12) in a region which is close to the outlet edge (4) have a larger thickness (10) axially at the ends than in a region therebetween, so that a thickening (15) is formed.

10. The guide vane (1) according to any one of Claims 1 to 9, **characterized in that** seals are arranged at end faces (16) of the guide vane body (2).

11. The guide vane (1) according to any one of Claims 1 to 10, **characterized in that** the pivots (6) have an end face (18) which is formed approximately normal to the axis of rotation (7) and at which the pivots (6) are connected to the guide vane body (2).

12. The guide vane (1) according to Claim 11, **characterized in that** a rounding (19) is arranged at a transition region between guide vane body (2) and end face (18), wherein the rounding (19) has different radii of curvature along a longitudinal direction (20) of the guide vane (1).

13. The guide vane (1) according to any one of Claims 1 to 12, **characterized in that** the guide vane body (2) has roundings (19) axially at the ends, which roundings extend from the leading edge (3) to the outlet edge (4).

14. A guide wheel for a pump or turbine, particularly for a Kaplan or Francis turbine, which guide wheel is formed by a plurality of guide vanes (1), **characterized in that** the guide vanes (1) are formed according to any one of Claims 1 to 13.

15. The guide wheel according to Claim 14, **characterized in that** the vane bodies of the guide vanes (1) are arranged eccentrically to the axes of rotation (7) of the respective guide vanes (1) in such a manner that the chords (5) of the vane bodies have a smaller spacing (11) from the machine axis than the axes of rotation (7).

## Revendications

1. Aube directrice (1), destinée à une roue directrice d'une pompe ou d'une turbine, comportant un corps (2) d'aube directrice doté d'un bord d'attaque (3), d'un bord de fuite (4), d'une corde (5) et d'au moins un pivot (6), l'aube directrice (1) étant susceptible d'être logée de manière rotative autour d'un axe de rotation (7), lequel est défini par le pivot (6), la corde (5) de l'aube directrice (1) étant écartée au moins par endroits de l'axe de rotation (7), le corps (2) d'aube directrice constituant le long d'une extension axiale différents profils d'écoulement (12), lesquels se différencient sur le bord d'attaque (3) et / ou sur le bord de fuite (4), **caractérisée en ce que** l'axe de rotation (7) est positionné au moins par endroits à l'extérieur du corps (2) d'aube directrice.

2. Aube directrice (1) selon la revendication 1, **caractérisée en ce que** le long d'une extension axiale totale du corps (2) d'aube directrice, l'axe de rotation (7) est positionné à l'extérieur du corps (2) d'aube directrice.

3. Aube directrice (1) selon la revendication 1 ou 2, **caractérisée en ce qu'**au moins par endroits, de préférence le long d'une extension axiale totale du corps (2) d'aube directrice, l'axe de rotation (7) présente par rapport au corps (2) d'aube directrice un écart (11), lequel correspond à au moins 50 %, de préférence à au moins 75 % d'une épaisseur (10) maximale de l'aube directrice (1).

4. Aube directrice (1) selon l'une quelconque des revendications 1 à 3, **caractérisée en ce qu'**au moins dans une zone partielle de l'aube directrice (1), de préférence le long d'une extension axiale totale du corps (2) d'aube directrice, la corde (5) présente par rapport à l'axe de rotation (7) un écart (11), lequel correspond à au moins 15 %, de préférence à au moins 30 % d'une longueur (9) de la corde (5).

5. Aube directrice (1) selon l'une quelconque des revendications 1 à 4, **caractérisée en ce qu'**au moins dans une zone partielle de l'aube directrice (1), de préférence le long d'une extension axiale totale du corps (2) d'aube directrice, la corde (5) présente par rapport à l'axe de rotation (7) un écart (11), lequel correspond à au moins 50 %, de préférence à au moins 75 % d'une épaisseur (10) maximale de l'aube directrice (1).

6. Aube directrice (1) selon l'une quelconque des revendications 1 à 5, **caractérisée en ce que** les profils d'écoulement (12) sur le bord d'attaque (3) présentent sur le côté extrémité en direction axiale une épaisseur (10) supérieure à celle dans une zone intermédiaire.

7. Aube directrice (1) selon l'une quelconque des revendications 1 à 6, **caractérisée en ce que** les profils d'écoulement (12) sur le bord d'attaque (3) comportent sur le côté extrémité en direction axiale des cordes (5) qui sont plus longues que des cordes (5) de profils d'écoulement (12) intermédiaires, de sorte que des ergots (13) d'extrémité se constituent sur le bord d'attaque (3).

8. Aube directrice (1) selon l'une quelconque des revendications 1 à 7, **caractérisée en ce que** sur le bord d'attaque (3), les cordes (5) des profils d'écoulement (12) du côté extrémité se situent sous un angle par rapport à des cordes (5) de profils d'écoulement (12) intermédiaires.

9. Aube directrice (1) selon l'une quelconque des revendications 1 à 8, **caractérisée en ce que** dans une zone qui est proche du bord de fuite (4), sur le côté extrémité dans la direction axiale, des profils d'écoulement (12) présentent une épaisseur (10) supérieure à celle dans une zone intermédiaire, de sorte qu'il se constitue un épaississement (15).

10. Aube directrice (1) selon l'une quelconque des revendications 1 à 9, **caractérisée en ce que** sur des faces frontales (16) du corps (2) d'aube directrice sont placés des joints.

11. Aube directrice (1) selon l'une quelconque des revendications 1 à 10, **caractérisée en ce que** les pivots (6) comportent une face frontale (18), laquelle est conçue approximativement à la normale de l'axe de rotation (7) et sur laquelle les pivots (6) sont reliés avec le corps (2) d'aube directrice.

12. Aube directrice (1) selon la revendication 11, **caractérisée en ce que** sur une zone de transition entre le corps (2) d'aube directrice et la face frontale (18) est placé un arrondi (19), l'arrondi (19) présentant différents rayons de courbure le long d'une direction longitudinale (20) de l'aube directrice (1).

13. Aube directrice (1) selon l'une quelconque des revendications 1 à 12, **caractérisée en ce que** sur le côté extrémité dans la direction axiale, le corps (2) d'aube directrice comporte des arrondis (19), lesquels s'étendent du bord d'attaque (3) jusqu'au bord de fuite (4).

14. Roue directrice, destinée à une pompe ou à une turbine, notamment à une turbine de Kaplan ou à une turbine de Francis, qui est constituée de plusieurs aubes directrices (1), **caractérisée en ce que** les aubes directrices (1) sont conçues selon l'une quelconque des revendications 1 à 13.

15. Roue directrice selon la revendication 14, **caractérisée en ce que** les corps d'aube des aubes directrices (1) sont placés de manière excentrique par rapport aux axes de rotation (7) des aubes directrices (1) respectives, de telle sorte que les cordes (5) des corps d'aube présentent un écart (11) moindre par rapport à l'axe de la machine que les axes de rotation (7).
